# EUROPEAN PATENT SPECIFICATION

(11) **EP 2 914 041 B1**
(45) Date of publication and mention of the grant of the patent: **09.10.2019**
(21) Application number: 13852122.4
(22) Date of filing: 16.08.2013
(51) Int. Cl.: H04W 60/06, H04W 4/00, G06F 9/445, H04W 4/70, G06F 13/10

(54) **METHOD, APPARATUS, AND GATEWAY FOR DEREGISTERING TERMINAL PERIPHERALS IN A MACHINE TYPE COMMUNICATION SYSTEM**
VERFAHREN, VORRICHTUNG UND GATEWAY ZUR DEREGISTRIERUNG VON PERIPHERIEGERÄTE IN EINEM MASCHINENKOMMUNIKATIONSSYSTEM
PROCÉDÉ, APPAREIL ET PASSERELLE POUR LE DÉSENREGISTREMENT DES TÉRMINAUX PÉRIPHÉRIQUES DANS UN SYSTÈME DE COMMUNICATION DE TYPE MACHINE À MACHINE

(30) Priority: 29.10.2012 CN 201210420776
(43) Date of publication of application: 02.09.2015
(73) Proprietor: ZTE Corporation, Shenzhen, Guangdong 518057 (CN)
(72) Inventor: WU, Hao, Shenzhen Guangdong 518057 (CN)
(74) Representative: Brevalex
(86) International application number: PCT/CN2013/081690
(87) International publication number: WO 2014/067319

(56) References cited:
- EP-A1- 2 472 790
- EP-A1- 2 509 374
- CN-A- 102 111 856
- CN-A- 102 238 573
- CN-A- 102 740 452
- US-A1- 2011 249 636
- US-A1- 2012 011 278
- US-A1- 2013 041 997

## Description

### TECHNICAL FIELD

The present disclosure relates to a terminal management technique in a Machine Type Communication (MTC) system, and particularly relates to a method and a device for deregistering a terminal peripheral in the MTC system, and a gateway.

### BACKGROUND

A Machine to Machine (M2M) communication network extends a scope and a field of communications of an existing information communication network, and obtains information from a physical world by embedding intelligence and communication ability in various possible objects, and increases and improves intellectuality, interactivity, and automaticity of an existing information communication network service based on analysis and processing of this information.

The M2M communication network has many network forms, and may be a singly constructed independent physical network, or may be a logic network constructed on an existing public communication network and various government and enterprise specific networks.

The M2M communication network may be divided into three layers based on a logic function, namely a perception extension layer, a network/service layer, and an application layer, wherein:
The perception extension layer mainly implements collection, automatic identification, and intelligent control of the information of the physical world. Various objects themselves in the physical world do not have the communication ability. An intelligent node, such as a sensor, an actuator, an intelligent device, a Radio Frequency Identification (RFID) reader-writer, and etc., collects the information of the physical world, and interacts with a network layer through a communication module. Main components contained by it are an M2M terminal device, an M2M gateway device, and etc.

The network/service layer supports transportation, routing, and control of the information of a perception layer, and provides support to the communications between a person and an object, and between the objects, in an Internet of Things (IOT). Combining with classification of the IOT, the network layer contains the following network forms: a communication network, an internet, an industrial network, and etc., which may mainly contain an M2M platform.

The application layer contains various applications of the IOT, not only contains a public service, but also contains an industrial service. Wherein the industrial service may be an industrial public service facing the public, and may also be an industry-specific service meeting a requirement of a special application inside an industry. Wherein, the public service may be a basic service which is provided, facing a common requirement of the public, such as an intelligent home, mobile payment, and etc. The industry-specific service is usually a service which is provided facing a peculiar need of the industry itself, and facing an interior of the industry, such as an intelligent power grid, intelligent traffic, an intelligent environment, and etc.; wherein a certain industrial service may also be provided facing the public, such as the intelligent traffic, and is called the industrial public service. The application layer mainly contains an M2M application server, and is also called an M2M application.

A terminal peripheral is referred to a single device having an environment perception function, such as a sensor and etc. which can send sensed information to an M2M service platform or an M2M application through an M2M gateway, and simultaneously can also receive downlink control thereof from the M2M application or the M2M service platform.

An M2M terminal has a peripheral and a feature such as limited processing ability, storage ability and power, and cannot directly communicate with the communication network, and needs to access the communication network through the M2M gateway. The M2M gateway can perform protocol conversion between an M2M perception extension layer and an upper-layer network. The M2M gateway can not only converge and forward data information collected by an M2M terminal peripheral, but also receive control information of the M2M application or M2M service platform, to manage the terminal peripheral.

The M2M service platform provides some common ability and support to the M2M application, and provides an open interface, so that an application can access and use a network resource and ability. By shielding the M2M application from lower-layer specific network implementation, complexity of developing an IOT application can be simplified and a cost of developing and deploying the IOT application can be lowered.

However, when the terminal peripheral governed by a certain gateway is needed to be replaced, old terminal information may still be stored in the gateway, when a number of replacement is too large and the number of the replaced terminal peripheral is large, the gateway may store more unnecessary information, resulting in a waste of a storage space, and finally resulting in that data of a new terminal peripheral cannot be stored, and the gateway cannot be operated normally.

EP 2509374 A1 discloses methods for detaching a mobile terminal from a mobile communication network. Furthermore, the invention also relates to a mobile terminal and a mobility management entity that perform these methods. The invention is inter alia applicable to a 3GPP LTE-A system following the Evolved Packet System (EPS) architecture. The invention proposes that the detach procedure of a mobile terminal is triggered by the mobile terminal being transferred into idle state. The mobility management entity can trigger the detach procedure in response to this event. The detach procedure may be deferred by a given time span. A detach timer may be configured in the mobile terminal and the mobility entity for this purpose, and upon expiry of the detach timer in the mobile terminal and the mobility management entity, both silently delete the context information related to the mobile terminal' user plane and control plane to despatch the mobile terminal.

EP2472790 A1 discloses a method, a mobility management unit and a gateway unit for restricting access and communication of a machine type communication (MTC). The method includes: a mobility management unit judging whether an access request or a service request of the MTC device is currently in a permission period according to the permission period of the MTC device; when the access request or the service request is not in the permission period, rejecting the access request or service request of the MTC device and notifying the MTC device of the rejection cause and/or the permission period at a meantime. The present invention can ensure that the MTC device only communicates in the permission period, and the MTC device is restricted to access the network or communicate in the non-permission period according to the requirement of the operator.

US 2012/011278 A1 discloses systems and methods for removing stale mapping entries for network element.

### SUMMARY

In view of this, a main purpose of the present disclosure is to provide a method and a device for deregistering a terminal peripheral in an MTC system, and a system, so that an unavailable terminal peripheral can be deregistered if possible, to guarantee operation efficiency of an MTC system.

The features of the method and device according to the present invention are defined in the independent claims, and the preferable features according to the present invention are defined in the dependent claims.

In the present disclosure, the gateway receives the first deregistration request message concerning the terminal peripheral, and generates and sends the second deregistration request message of the terminal peripheral to the M2M service platform or the M2M application; after receiving the first deregistration confirmation message of the terminal peripheral sent by the M2M service platform or the M2M application, the gateway deletes the information of local relevant terminal peripheral, and generates and sends the second deregistration confirmation message of the terminal peripheral to the terminal peripheral. Wherein the gateway generates the second deregistration request message when the preset period comes, or generates the second deregistration request message when determining that the number of the terminal peripheral to be deregistered exceeds the preset threshold. According to the present disclosure, when the terminal peripheral governed by a certain gateway is unavailable, relevant information for deregistering this terminal peripheral is sent to the gateway through this unavailable terminal peripheral, the gateway notifies the M2M service platform or the M2M application of the information of the terminal peripheral to be deregistered in batches in accordance with a certain comprehensive processing way, and these terminal peripherals are deregistered by the M2M service platform or the M2M application; after receiving a deregistration confirmation message of the M2M service platform or the M2M application, the gateway deletes local registration information of the relevant terminal peripheral, to completely deregister the terminal peripheral, and notifies the terminal peripheral or a gateway centre. In this way, registration relevant information of the unavailable terminal peripheral is not stored at a network side any more, and a storage space at the network side is saved. Besides, because the network side does not store useless registration information of the terminal peripheral, efficiency of maintaining the registration information of the terminal peripheral by the network side will be greatly improved. With regard to the terminal peripheral in the MTC system which has a huge data amount, the technical scheme of the present disclosure can deregister the registration information of the terminal peripheral in time, guarantee the storage space of the network side, and improve processing efficiency of the network side.

### BRIEF DESCRIPTION OF THE DRAWINGS

Fig. 1 is a flowchart of a method for deregistering a terminal peripheral in an MTC system of an embodiment of the present disclosure; and
Fig. 2 is a structure diagram of a device for deregistering a terminal peripheral in an MTC system of an embodiment of the present disclosure.

### DETAILED DESCRIPTION

In an embodiment of the present disclosure, a gateway receives a first deregistration request message concerning a terminal peripheral, and generates and sends a second deregistration request message of the terminal peripheral to an M2M service platform or an M2M application; and after receiving a first deregistration confirmation message of the terminal peripheral sent by the M2M service platform or the M2M application, the gateway deletes information of a local relevant terminal peripheral, and generates and sends a second deregistration confirmation message of the terminal peripheral to the terminal peripheral.

In order to make a purpose, a technical scheme, and an advantage of the present disclosure more dear and explicit, the present disclosure is further illustrated in detail below by giving an embodiment with reference to an accompanied drawing.

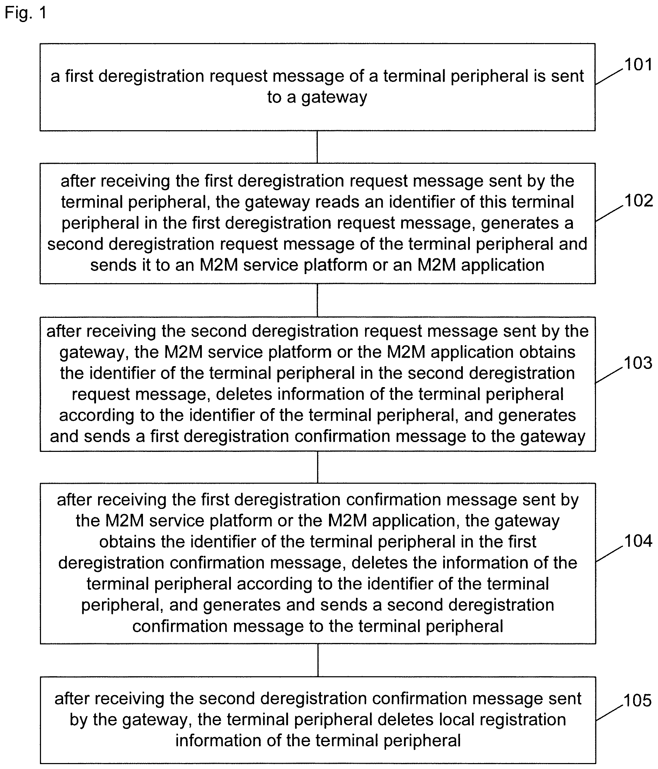

Fig. 1 is a flowchart of a method for deregistering a terminal peripheral in an MTC system in an embodiment of the present disclosure, as shown in Fig. 1, the method for deregistering the terminal peripheral in the MTC system of this embodiment includes the following steps:
Step 101, a first deregistration request message of a terminal peripheral is sent to a gateway.

In the present disclosure, the first deregistration request message contains an identifier of a message type and the identifier of the terminal peripheral. A format of the first deregistration request message of the terminal peripheral of this embodiment may be referred in Table 1 below. In Table 1, a protocol identifier is also the identifier of the message type.

In this step, the first deregistration request message may be sent by the terminal peripheral to be deregistered, for example when the terminal peripheral is not used, the terminal peripheral actively sends the first deregistration request message to the gateway.

**Table 1**

| Reference | Remark |
|---|---|
| Protocol identifier | The protocol identifier is used to identify that a current message is "a deregistration request" |
| Identifier of terminal peripheral | The identifier is used to set the terminal peripheral needed to be deregistered |

Step 102, after receiving the first deregistration request message sent by the terminal peripheral, the gateway reads an identifier of this terminal peripheral in the first deregistration request message, and generates and sends a second deregistration request message of the terminal peripheral to an M2M service platform or an M2M application.

The second deregistration request message at least contains the identifier of the message type, the identifier of the gateway, the identifier of the terminal peripheral to be deregistration, or an identifier list. The format of the second deregistration request message of the terminal peripheral of this embodiment may be referred in Table 2 below.

**Table 2**

| Reference | Remark |
|---|---|
| Protocol identifier | The protocol identifier is used to identify that the current message is "a terminal peripheral deregistration request" |
| Identifier of | The identifier is used to set the gateway which is |

| gateway | sending a message currently |
|---|---|
| Identifier of terminal peripheral or identifier list | The identifier or the identifier list is used to set the terminal peripheral needed to be deregistered |

In this embodiment, the gateway receives the first deregistration request message sent by the terminal peripheral to be deregistered. However, the gateway does not generate and send the second deregistration request message to the M2M service platform or the M2M application once receiving the first deregistration request message, but performs deregistration of registration information of the terminal peripheral comprehensively after receiving a certain number of the first deregistration request messages. Of course, if there is a single terminal peripheral to be deregistered, the first deregistration request message only contains the identifier of the terminal peripheral.

Specifically, after receiving the first deregistration request message of the terminal peripheral, the gateway immediately generates the second deregistration request message of the terminal peripheral;
or, the gateway generates the second deregistration request message when a preset period comes;
or, the gateway generates the second deregistration request message when determining that a number of the terminal peripheral to be deregistered exceeds a preset threshold; wherein, the preset threshold is larger than or equal to a maximum number of the terminal peripheral which can be carried by the identifier list of the terminal peripheral to be deregistered of the second deregistration request message.

Step 103, after receiving the second deregistration request message sent by the gateway, the M2M service platform or the M2M application obtains the identifier of the terminal peripheral in the second deregistration request message, deletes information of the terminal peripheral according to the identifier of the terminal peripheral, and generates and sends a first deregistration confirmation message to the gateway.

Here, the information of the terminal peripheral includes but is not limited to the identifier of the terminal peripheral and the identifier of the gateway registered by the terminal peripheral.

The first deregistration confirmation message contains the identifier of the terminal peripheral of which associated information is deleted or the information such as the identifier list, the message type, and etc. The format of the first deregistration confirmation message may be referred in Table 3.

**Table 3**

| Reference | Remark |
|---|---|
| Protocol identifier | The protocol identifier is used to identify that the current message is "deregistration confirmation of the terminal peripheral" |
| Identifier of terminal peripheral or identifier list | The identifier or the identifier list is used to set a deregistered terminal peripheral. |

Step 104, after receiving the first deregistration confirmation message sent by the M2M service platform or the M2M application, the gateway obtains the identifier of the terminal peripheral in the first deregistration confirmation message, deletes the information of the terminal peripheral according to the identifier of the terminal peripheral, and generates and sends a second deregistration confirmation message to the terminal peripheral.

Here, the information of the terminal peripheral includes but is not limited to the identifier of the terminal peripheral and an address of the terminal peripheral. The second deregistration confirmation message at least contains the identifier of the message type, and the identifier of the deregistered terminal peripheral. The format of the second deregistration confirmation message is referred in Table 4.

**Table 4**

| Parameter | Remark |
|---|---|
| Protocol identifier | The protocol identifier is used to identify that the current message is "deregistration confirmation" |
| Identifier of terminal peripheral | The identifier is used to set the deregistered terminal peripheral |

Step 105, after receiving the second deregistration confirmation message sent by the gateway, the terminal peripheral deletes local registration information of the terminal peripheral.

Here, the local registration information of the terminal peripheral may include the identifier of the gateway to which the terminal peripheral is registered, the identifier or the address allocated by the gateway.

When receiving the second deregistration confirmation message, the terminal peripheral directly deletes the local registration information.

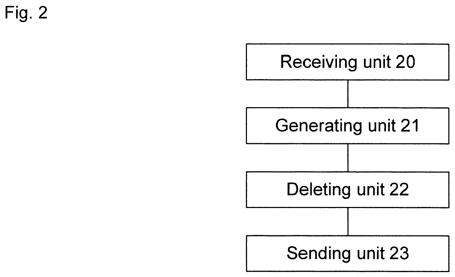

Fig. 2 is a structure view of a device for deregistering a terminal peripheral in an MTC system in an embodiment of the present disclosure, as shown in Fig. 2, the device for deregistering the terminal peripheral in the MTC system of embodiment of the present disclosure includes a receiving unit 20, a generating unit 21, a deleting unit 22, and a sending unit 23, wherein:
the receiving unit 20 is configured to receive a first deregistration request message concerning the terminal peripheral, and to receive a first deregistration confirmation message of the terminal peripheral sent by an M2M service platform or an M2M application;
the generating unit 21 is configured to generate a second deregistration request message of the terminal peripheral, and to generate a second deregistration confirmation message of the terminal peripheral;
the deleting unit 22 is configured to information of a local relevant terminal peripheral after the receiving unit receives the first deregistration confirmation message; and
the sending unit 23 is configured to send the second deregistration request message to the M2M service platform or the M2M application, and to send the second deregistration confirmation message to the terminal peripheral.

After receiving the second deregistration request message, the M2M service platform or the M2M application deletes information of the relevant terminal peripheral according to an identifier of the terminal peripheral in the second deregistration request message, and the information of the relevant terminal peripheral at least includes the identifier of the terminal peripheral, and the identifier of a gateway to which the terminal peripheral is registered.

The first deregistration request message at least contains the identifier of the terminal peripheral to be deregistered.

The second deregistration request message at least contains the identifier of the gateway, the identifier of the terminal peripheral to be deregistered, or an identifier list of the terminal peripheral to be deregistered.

The above generating unit 21 is further configured to immediately generate the second deregistration request message of the terminal peripheral after receiving the first deregistration request message of the terminal peripheral;
or, to generate the second deregistration request message when a preset period comes;
or, the above generating unit 21 is further configured to generate the second deregistration request message when determining that a number of the terminal peripheral to be deregistered exceeds a preset threshold; wherein, the preset threshold is larger than or equal to a maximum number of the terminal peripheral which can be carried by the identifier list of the terminal peripheral to be deregistered of the second deregistration request message.

The above second deregistration confirmation message at least contains the identifier of a deregistered terminal peripheral;
the above first deregistration confirmation message at least contains the identifier of the deregistered terminal peripheral or the identifier list of the deregistered terminal peripheral.

Those skilled in the art shall understand that functions implemented by various processing units in the device for deregistering the terminal peripheral in the MTC system of the present disclosure may be understood with reference to a relevant description of the above method for deregistering the terminal peripheral in the MTC system. Those skilled in the art shall understand that the functions of various processing units in the device for deregistering the terminal peripheral in the MTC system which is shown in Fig. 2 may be implemented through a program operating in a processor, and may also be implemented through a specific logic circuit.

The present disclosure also records a gateway in an MTC system, which includes the above device for deregistering the terminal peripheral shown in Fig. 2.

Of course, those skilled in the art shall understand that various processing units or steps of the present disclosure above may be implemented by a computing device, which may be concentrated in a single computing device, or may be distributed in a network composed of multiple computing devices, and optically may be implemented by a program code which can be executed by the computing device, so that they may be stored in a storage device to be executed by the computing device, or they may be separately made into various integrated circuit modules, or multiple modules or steps of them may be made into a single integrated circuit module for implementation. In this way, the present disclosure is not limited to any specific combination of hardware and software.

### INDUSTRIAL APPLICABILITY

Through the technical scheme of the present disclosure, when the terminal peripheral governed by a certain gateway is unavailable, relevant information for deregistering this terminal peripheral is sent to the gateway through this unavailable terminal peripheral, the gateway notifies the M2M service platform or the M2M application of the information of the terminal peripheral to be deregistered in batches in accordance with a certain comprehensive processing way, and these terminal peripherals are deregistered by the M2M service platform or the M2M application; after receiving a deregistration confirmation message of the M2M service platform or the M2M application, the gateway deletes local registration information of the relevant terminal peripheral, to completely deregister the terminal peripheral, and notifies the terminal peripheral or a gateway centre. In this way, registration relevant information of the unavailable terminal peripheral is not stored at a network side any more, and a storage space at the network side is saved. Besides, because the network side does not store useless registration information of the terminal peripheral, efficiency of maintaining the registration information of the terminal peripheral by the network side will be greatly improved. With regard to the terminal peripheral in the MTC system which has a huge data amount, the technical scheme of the present disclosure can deregister the registration information of the terminal peripheral in time, guarantee the storage space of the network side, and improve processing efficiency of the network side.

## Claims

1. A method for deregistering terminal peripherals in a Machine Type Communication, MTC, system, the method comprising:
receiving (S102), by a Machine to Machine, M2M, gateway, a first deregistration request message concerning a terminal peripheral actively sent by each of the terminal peripherals, wherein the first deregistration request message at least contains an identifier of the terminal peripheral to be deregistered;
reading (S102), by the M2M gateway, the identifier of each terminal peripheral to be deregistered in the first deregistration request message, generating (S102), by the M2M gateway, a second deregistration request message of the terminal peripherals when determining that a number of the terminal peripherals to be deregistered exceeds a preset threshold, and sending (S102), by the M2M gateway, the second deregistration request message of the terminal peripherals to a M2M service platform or an M2M application, wherein the second deregistration request message at least contains an identifier of the M2M gateway and an identifier list of the terminal peripherals to be deregistered, and wherein the preset threshold is larger than or equal to a maximum number of the terminal peripherals which can be carried by the identifier list of the terminal peripherals to be deregistered of the second deregistration request message;
receiving (S104), by the M2M gateway, a first deregistration confirmation message sent by the M2M service platform or the M2M application after the M2M service platform or the M2M application receives (S103) the second deregistration request message, deletes (S103) information of relevant terminal peripherals according to the identifier list of the terminal peripherals to be deregistered in the second deregistration request message, and generates and sends (S103) the first deregistration confirmation message to the M2M gateway, wherein the information of the relevant terminal peripherals at least comprises identifiers of the terminal peripherals to be deregistered, and the identifier of the M2M gateway registered by the terminal peripherals to be deregistered, wherein the first deregistration confirmation message at least contains an identifier list of deregistered terminal peripherals; and
deleting (S104), by the M2M gateway from the M2M gateway, information of relevant terminal peripherals according to the identifier list of the deregistered terminal peripherals in the first deregistration confirmation message, and generating and sending (S104) a second deregistration confirmation message of the terminal peripherals to the terminal peripherals.

2. The method according to claim 1, wherein the second deregistration confirmation message at least contains an identifier of a deregistered terminal peripheral.

3. The method according to any one of claims 1-2, wherein the information of the relevant terminal peripherals deleted by the M2M gateway from the M2M gateway at least comprises identifiers of the terminal peripherals, and addresses of the terminal peripherals.

4. A system for deregistering terminal peripherals, the system comprising a Machine to Machine, M2M, gateway and an M2M service platform or an M2M application, the M2M gateway comprises: a receiving unit (20), a generating unit (21), a deleting unit (22), and a sending unit (23), wherein
the receiving unit (20) is configured to receive a first deregistration request message concerning a terminal peripheral actively sent by each of the terminal peripherals, wherein the first deregistration request message at least contains an identifier of the terminal peripheral to be deregistered;
the generating unit (21) is configured to, after the receiving unit (20) receives the first deregistration request message, read the identifier of each terminal peripheral to be deregistered in the first deregistration request message and generate a second deregistration request message of the terminal peripheral when determining that a number of the terminal peripherals to be deregistered exceeds a preset threshold, wherein the second deregistration request message at least contains an identifier of the M2M gateway and an identifier list of terminal peripherals to be deregistered, and wherein the preset threshold is larger than or equal to a maximum number of the terminal peripherals which can be carried by the identifier list of the terminal peripherals to be deregistered of the second deregistration request message;
the sending unit (23) is configured to send the second deregistration request message to an M2M service platform or an M2M application;
the M2M service platform or an M2M application is configured to delete information of relevant terminal peripherals according to the identifier list of the terminal peripherals to be deregistered in the second deregistration request message, generate and send the first deregistration confirmation message to the receiving unit (20), wherein the information of the relevant terminal peripherals at least comprises identifiers of the terminal peripherals to be deregistered, and the identifier of the M2M gateway registered by the terminal peripherals to be deregistered, wherein the first deregistration confirmation message at least contains an identifier list of deregistered terminal peripherals;
the receiving unit (20) is further configured to receive the first deregistration confirmation message sent by the M2M service platform or the M2M application;
the deleting unit (22) is configured to delete, from the M2M gateway, information of relevant terminal peripherals according to the identifier list of the deregistered terminal peripherals in the first deregistration confirmation message after the receiving unit (20) receives the first deregistration confirmation message;
the generating unit (21) is further configured to generate a second deregistration confirmation message of the terminal peripherals peripheral after the deleting unit (22) deletes the information of the relevant terminal peripherals; and
the sending unit (23) is further configured to send the second deregistration confirmation message to the terminal peripherals.

5. The system according to claim 4, wherein the second deregistration confirmation message at least contains an identifier of a deregistered terminal peripheral.

## Patentansprüche

1. Verfahren zum Abmelden von peripheren Endgeräten in einem "Machine Type Communication"-, MTC-, System, wobei das Verfahren umfasst:
Empfangen (S102), durch eine "Machine to Machine"-, M2M-, Schnittstelle, einer ersten Abmeldeanfragenachricht, die ein peripheres Endgerät betrifft und die durch jedes der peripheren Endgeräte gesendet worden ist, wobei die erste Abmeldeanfragenachricht mindestens einen Identifikator des abzumeldenden peripheren Endgeräts enthält;
Lesen (S102), durch die M2M-Schnittstelle, des Identifikators von jedem abzumeldenden peripheren Endgerät in der ersten Abmeldeanfragenachricht, Erzeugen (S102), durch die M2M-Schnittstelle, einer zweiten Abmeldeanfragenachricht der peripheren Endgeräte, wenn bestimmt wird, dass eine Anzahl der abzumeldenden peripheren Endgeräte eine voreingestellte Schwelle übersteigt, und Senden (S102), durch die M2M-Schnittstelle, der zweiten Abmeldeanfragenachricht der peripheren Endgeräte zu einer M2M-Dienstplattform oder einer M2M-Anwendung, wobei die zweite Abmeldeanfragenachricht mindestens einen Identifikator der M2M-Schnittstelle und eine Identifikatorliste der abzumeldenden peripheren Endgeräte enthält, und wobei die voreingestellte Schwelle größer als eine maximale Anzahl der peripheren Endgeräte ist, die von der Identifikatorliste der abzumeldenden peripheren Endgeräte der zweiten Abmeldeanfragenachricht unterstützt werden können, oder mit dieser identisch ist;
Empfangen (S104), durch die M2M-Schnittstelle, einer ersten Abmeldebestätigungsnachricht, die durch die M2M-Dienstplattform oder die M2M-Anwendung gesendet wird, nachdem die M2M-Dienstplattform oder die M2M-Anwendung die zweite Abmeldeanfragenachricht empfangen hat (S103), Informationen über relevante periphere Endgeräte gemäß der Identifikatorliste der abzumeldenden peripheren Endgeräte in der zweiten Abmeldeanfragenachricht löscht (S103), und die erste Abmeldebestätigungsnachricht erzeugt und zu der M2M-Schnittstelle sendet (S103), wobei die Informationen über die relevanten peripheren Endgeräte mindestens Identifikatoren der abzumeldenden peripheren Endgeräte und den Identifikator der M2M-Schnittstelle, die durch die abzumeldenden peripheren Endgeräte angemeldet ist, umfassen, wobei die erste Abmeldebestätigungsnachricht mindestens eine Identifikatorliste der abgemeldeten peripheren Endgeräte enthält; und
Löschen (S104), durch die M2M-Schnittstelle von der M2M-Schnittstelle, von Informationen über relevante periphere Endgeräte gemäß der Identifikatorliste der abgemeldeten peripheren Endgeräte in der ersten Abmeldebestätigungsnachricht, und Erzeugen und Senden (S104) einer zweiten Abmeldebestätigungsnachricht der peripheren Endgeräte zu den peripheren Endgeräten.

2. Verfahren nach Anspruch 1, bei dem die zweite Abmeldebestätigungsnachricht mindestens einen Identifikator eines abgemeldeten peripheren Endgeräts enthält.

3. Verfahren nach einem der Ansprüche 1 bis 2, bei dem die Informationen über die relevanten peripheren Endgeräte, die durch die M2M-Schnittstelle von der M2M-Schnittstelle gelöscht worden sind, mindestens Identifikatoren der peripheren Endgeräte und Adressen der peripheren Endgeräte umfassen.

4. System zum Abmelden von peripheren Endgeräten, wobei das System eine "Machine to Machine"-, M2M-, Schnittstelle und eine M2M-Dienstplattform oder eine M2M-Anwendung umfasst, wobei die M2M-Schnittstelle umfasst: eine Empfangseinheit (20), eine Erzeugungseinheit (21), eine Löscheinheit (22) und eine Sendeeinheit (23), wobei
die Empfangseinheit (20) zum Empfangen einer ersten Abmeldeanfragenachricht ausgebildet ist, die ein peripheres Endgerät betrifft und die durch jedes der peripheren Endgeräte aktiv gesendet worden ist, wobei die erste Abmeldeanfragenachricht mindestens einen Identifikator des abzumeldenden peripheren Endgeräts enthält;
die Erzeugungseinheit (21) zum Lesen des Identifikators von jedem abzumeldenden peripheren Endgerät in der ersten Abmeldeanfragenachricht und Erzeugen einer zweiten Abmeldeanfragenachricht des peripheren Endgeräts ausgebildet ist, nachdem die Empfangseinheit (20) die erste Abmeldeanfragenachricht empfangen hat, wenn bestimmt wird, dass eine Anzahl der abzumeldenden peripheren Endgeräte eine voreingestellte Schwelle übersteigt, wobei die zweite Abmeldeanfragenachricht mindestens einen Identifikator der M2M-Schnittstelle und eine Identifikatorliste von abzumeldenden peripheren Endgeräten enthält, und wobei die voreingestellte Schwelle größer als eine maximale Anzahl der peripheren Endgeräte ist, die von der Identifikatorliste der abzumeldenden peripheren Endgeräte der zweiten Abmeldeanfragenachricht unterstützt werden können, oder mit dieser identisch ist;
die Sendeeinheit (23) zum Senden der zweiten Abmeldeanfragenachricht an eine M2M-Dienstplattform oder eine M2M-Anwendung ausgebildet ist;
die M2M-Dienstplattform oder eine M2M-Anwendung zum Löschen von Informationen über relevante periphere Endgeräte gemäß der Identifikatorliste der abzumeldenden peripheren Endgeräte in der zweiten Abmeldeanfragenachricht, Erzeugen und Senden der ersten Abmeldebestätigungsnachricht zu der Empfangseinheit (20), wobei die Informationen über die relevanten peripheren Endgeräte mindestens Identifikatoren der abzumeldenden peripheren Endgeräte und den Identifikator der M2M-Schnittstelle, die durch die abzumeldenden peripheren Endgeräte angemeldet ist, umfassen, wobei die erste Abmeldebestätigungsnachricht mindestens eine Identifikatorliste von abgemeldeten peripheren Endgeräten enthält, ausgebildet ist;
die Empfangseinheit (20) ferner zum Empfangen der ersten Abmeldebestätigungsnachricht, die durch die M2M-Dienstplattform oder die M2M-Anwendung gesendet wird, ausgebildet ist;
die Löscheinheit (22) zum Löschen, von der M2M-Schnittstelle, von Informationen über relevante periphere Endgeräte gemäß der Identifikatorliste der abgemeldeten peripheren Endgeräte in der ersten Abmeldebestätigungsnachricht ausgebildet ist, nachdem die Empfangseinheit (20) die erste Abmeldebestätigungsnachricht empfangen hat;
die Erzeugungseinheit (21) ferner zum Erzeugen einer zweiten Abmeldebestätigungsnachricht der peripheren Endgeräte ausgebildet ist, nachdem die Löscheinheit (22) die Informationen über die relevanten peripheren Endgeräte gelöscht hat; und
die Sendeeinheit (23) ferner zum Senden der zweiten Abmeldebestätigungsnachricht zu den peripheren Endgeräten ausgebildet ist.

5. System nach Anspruch 4, bei dem die zweite Abmeldebestätigungsnachricht mindestens einen Identifikator eines abgemeldeten peripheren Endgeräts enthält.

## Revendications

1. Procédé pour le désenregistrement de terminaux périphériques dans un système de communication de type machine, MTC, le procédé comprenant :
la réception (S102), par une passerelle machine à machine, M2M, d'un premier message de demande de désenregistrement concernant un terminal périphérique envoyé activement par chacun des terminaux périphériques, dans lequel le premier message de demande de désenregistrement contient au moins un identifiant du terminal périphérique à désenregistrer ;
la lecture (S102), par la passerelle M2M, de l'identifiant de chaque terminal périphérique à désenregistrer dans le premier message de demande de désenregistrement, la génération (S102), par la passerelle M2M, d'un deuxième message de demande de désenregistrement des terminaux périphériques lorsqu'on détermine qu'un nombre des terminaux périphériques à désenregistrer dépasse un seuil préétabli, et l'envoi (S102), par la passerelle M2M, du deuxième message de demande de désenregistrement des terminaux périphériques à une plateforme de service M2M ou une application M2M, dans lequel le deuxième message de demande de désenregistrement contient au moins un identifiant de la passerelle M2M et une liste d'identifiants des terminaux périphériques à désenregistrer, et dans lequel le seuil préétabli est supérieur ou égal à un nombre maximal des terminaux périphériques qui peuvent être acheminés par la liste d'identifiants des terminaux périphériques à désenregistrer du deuxième message de demande de désenregistrement ;
la réception (S104), par la passerelle M2M, d'un premier message de confirmation de désenregistrement envoyé par la plateforme de service M2M ou l'application M2M après que la plateforme de service M2M ou l'application M2M reçoit (S103) le deuxième message de demande de désenregistrement, supprime (S103) des informations de terminaux périphériques concernés selon la liste d'identifiants des terminaux périphériques à désenregistrer dans le deuxième message de demande de désenregistrement, et génère et envoie (S103) le premier message de confirmation de désenregistrement à la passerelle M2M, dans lequel les informations des terminaux périphériques concernés comprennent au moins des identifiants des terminaux périphériques à désenregistrer, et l'identifiant de la passerelle M2M enregistré par les terminaux périphériques à désenregistrer, dans lequel le premier message de confirmation de désenregistrement contient au moins une liste d'identifiants de terminaux périphériques désenregistrés ; et
la suppression (S104), par la passerelle M2M depuis la passerelle M2M, d'informations de terminaux périphériques concernés selon la liste d'identifiants des terminaux périphériques désenregistrés dans le premier message de confirmation de désenregistrement, et la génération et l'envoi (S104) d'un deuxième message de confirmation de désenregistrement des terminaux périphériques aux terminaux périphériques.

2. Procédé selon la revendication 1, dans lequel le deuxième message de confirmation de désenregistrement contient au moins un identifiant d'un terminal périphérique désenregistré.

3. Procédé selon l'une quelconque des revendications 1 et 2, dans lequel les informations des terminaux périphériques concernés supprimées par la passerelle M2M depuis la passerelle M2M comprennent au moins des identifiants des terminaux périphériques, et des adresses des terminaux périphériques.

4. Système de désenregistrement de terminaux périphériques, le système comprenant une passerelle machine-machine, M2M et une plateforme de service M2M ou une application M2M, la passerelle M2M comprend : une unité de réception (20), une unité de génération (21), une unité de suppression (22), et une unité d'envoi (23), dans lequel
l'unité de réception (20) est configurée pour recevoir un premier message de demande de désenregistrement concernant un terminal périphérique envoyé activement par chacun des terminaux périphériques, dans lequel le premier message de demande de désenregistrement contient au moins un identifiant du terminal périphérique à désenregistrer ;
l'unité de génération (21) est configurée, après que l'unité de réception (20) reçoit le premier message de demande de désenregistrement, pour lire l'identifiant de chaque terminal périphérique à désenregistrer dans le premier message de demande de désenregistrement et générer un deuxième message de demande de désenregistrement du terminal périphérique lorsqu'on détermine qu'un nombre des terminaux périphériques à désenregistrer dépasse un seuil préétabli, dans lequel le deuxième message de demande de désenregistrement contient au moins un identifiant de la passerelle M2M et une liste d'identifiants de terminaux périphériques à désenregistrer, et dans lequel le seuil préétabli est supérieur ou égal à un nombre maximal des terminaux périphériques qui peuvent être acheminés par la liste d'identifiants des terminaux périphériques à désenregistrer du deuxième message de demande de désenregistrement ;
l'unité d'envoi (23) est configurée pour envoyer le deuxième message de demande de désenregistrement à une plateforme de service M2M ou une application M2M ;
la plateforme de service M2M ou une application M2M est configurée pour supprimer des informations de terminaux périphériques concernés selon la liste d'identifiants des terminaux périphériques à désenregistrer dans le deuxième message de demande de désenregistrement, générer et envoyer le premier message de confirmation de désenregistrement à l'unité de réception (20), dans lequel les informations des terminaux périphériques concernés comprennent au moins des identifiants des terminaux périphériques à désenregistrer, et l'identifiant de la passerelle M2M enregistré par les terminaux périphériques à désenregistrer, dans lequel le premier message de confirmation de désenregistrement contient au moins une liste d'identifiants de terminaux périphériques désenregistrés ;
l'unité de réception (20) est en outre configurée pour recevoir le premier message de confirmation de désenregistrement envoyé par la plateforme de service M2M ou l'application M2M ;
l'unité de suppression (22) est configurée pour supprimer, depuis la passerelle M2M, des informations de terminaux périphériques concernés selon la liste d'identifiants des terminaux périphériques désenregistrés dans le premier message de confirmation de désenregistrement après que l'unité de réception (20) reçoit le premier message de confirmation de désenregistrement ;
l'unité de génération (21) est en outre configurée pour générer un deuxième message de confirmation de désenregistrement des terminaux périphériques après que l'unité de suppression (22) supprime les informations des terminaux périphériques concernés ; et
l'unité d'envoi (23) est en outre configurée pour envoyer le deuxième message de confirmation de désenregistrement aux terminaux périphériques.

5. Système selon la revendication 4, dans lequel le deuxième message de confirmation de désenregistrement contient au moins un identifiant d'un terminal périphérique désenregistré.
